# EUROPEAN PATENT APPLICATION

(11) **EP 3 267 087 A1**
(43) Date of publication of application: **10.01.2018**
(21) Application number: 17001158.9
(22) Date of filing: 06.07.2017
(51) Int. Cl.: F16L 47/03, B29C 65/34, F16L 5/00, F16L 41/08, G01F 15/14, G01F 15/18

(54) **GAS CONNECTIONS TO INSTALLATIONS OF GAS-METER BOXES**

(30) Priority: 06.07.2016 GB 201611752
(71) Applicant: Kimplas Piping Systems Limited, Nashik 422 010, Maharashtra (IN)
(72) Inventor: Thompson, Paul Maurice, Toppersfield, Essex CO9 4DZ (GB); Khanna, Krishen Lal, 422007 Nashik (IN); Vazhavil, Santosh Kumar, 422006 Nashik (IN); Patil, Kantilal Mulchand, 422009 Nashik (IN)
(74) Representative: Coles, Graham Frederick

(57) **Abstract**

A gas connection Lo an installation of a gas-meter box (1) involves an adaptor (4) having an axially-aligned tubular metal head (11) and tubular body (13) of plastics that provide a gas-flow path from a plastics gas-supply pipe (6) which has its end (29) inserted into an open rear-end (14) of the tubular body (13) to be surrounded by an electrically-energisable heater element (18) of the adaptor (4) and retained there by electrofusion. The adaptor (4) projects through the bottom wall (5) of the box (1) and is clamped to it between a flange (23) of the body (13) that abuts the external surface (27) of the wall (5), and a C-shape clip (24) inserted between a shoulder (26) of the tubular head (11) and an internal surface (28) of the wall (5).

## Description

This invention relates to gas connections to installations of gas-meter boxes, to adaptors for use in such connections, and to methods of establishing gas connections to installations of gas-meter boxes.

It is an object of the present invention to simplify gas connections to installations of gas-meter boxes, and in this respect to provide an adaptor for use in simplifying such connections. In this respect also, it is an object of the present invention to facilitate, and by this simplify, the method of establishing such gas connections.

According to one aspect of the present invention there is provided a gas connection to an installation of a gas-meter box, wherein the connection is established via an adaptor which is clamped to the gas-meter box, and a gas-supply pipe for supplying gas to the adaptor is secured to the adaptor by electrofusion.

The gas-supply pipe for supplying gas to the adaptor may extend into the adaptor surrounded by an electrically-energisable heater element of the adaptor for use in securing the gas-supply pipe to the adaptor by electrofusion.

The adaptor may comprise a tubular head and a tubular body that are axially-aligned with one another to provide a gas-flow path through the adaptor, and a part of the gas-supply pipe may extend into this tubular body surrounded by the electrically-energisable heater element.

In these latter circumstances, the tubular head of the adaptor may project into the gas-meter box through a wall of the gas-meter box with the adaptor clamped to the wall between a flange of the tubular body that abuts an external surface of the wall, and a clip inserted between a shoulder of the tubular head and an internal surface of the wall. The clip may be substantially C-shape having limbs that are inserted either side of the tubular head between the shoulder of the tubular head and the internal surface of the wall.

According to another aspect of the present invention there is provided an adaptor for establishing a gas connection to an installation of a gas-meter box, wherein the adaptor comprises a tubular head and a tubular body which are axially aligned with one another to provide a gas-flow path through the adaptor, the tubular body having an open rear-end for receiving insertion into the gas-flow path of a gas-supply pipe of plastics, and an electrically-energisable heater element surrounding the gas-flow path within the tubular body for fusing an inserted gas supply-pipe to the tubular body of the adaptor by electrofusion.

According to a further aspect of the present invention there is provided a method for establishing a gas connection to an installation of a gas-meter box, comprising: a step of clamping an adaptor to the gas-meter box, the adaptor having a tubular head and a tubular body which are axially-aligned with one another to provide a gas-flow path through the adaptor, and an electrical heater surrounding the gas-flow path within the tubular body; a step of inserting an end of a gas-supply pipe of plastics into the gas-flow path of the tubular body; and a step of electrically-energising the heater element surrounding the gas-flow path within the tubular body to fuse the end of the gas supply-pipe to the tubular body of the adaptor, by electrofusion.

An example of a gas connection to an installation of a gas-meter box and an adaptor for use therein, as well as a method of using such an adaptor for establishing gas connection to a domestic, residential, commercial or other installation of a gas-meter box, all in accordance with the present invention, will now be described, by way of example, with reference to the accompanying drawings, in which:
Figure 1 is illustrative of a gas connection to a domestic, residential commercial or other installation of a gas-meter box, in accordance with the present invention;
figure 2 is a perspective view of an adaptor according to the invention, used to facilitate the gas connection of Figure 1;
Figure 3 is an exploded, sectional view of the adaptor of Figure 2;
Figure 4 is a sectional view illustrative of the adaptor of Figure 2 used in the gas connection to the installation of gas-meter-box of Figure 1 and in a method of establishing the gas connection; and
Figure 5 is illustrative of a clip used for retention of the adaptor in the gas-meter box of Figure 1.

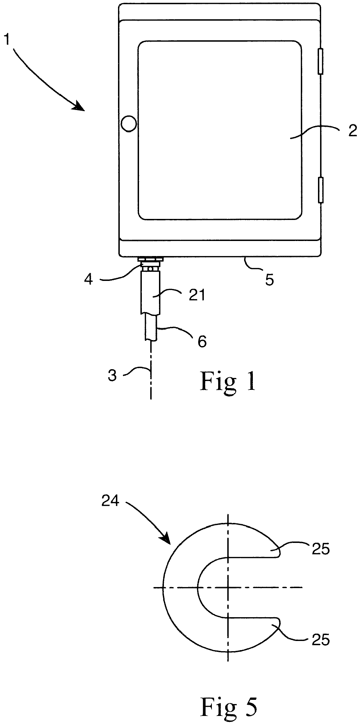

Referring to Figure 1, a domestic, residential, commercial or other installation of a gas-meter box in this example involves a surface-mounted box 1 that houses the gas meter (not shown). The gas meter is accessible within the box 1 through a hinged door 2, and although the box 1 as described is surface-mounted this is not necessarily so, since it could equally-well be recess-mounted built-in within a wall or other supporting structure. The gas-meter box 1 may be of metal, of plastics or of a glass-reinforced resin, or of a combination of such materials.

A supply line 3 for supplying gas from an underground gas-main (not shown) to the meter in the box 1, is established via an adaptor 4 that is secured to the box 1 through the bottom wall 5 of the box 1. The adaptor 4, which is supplied with gas from the main by a pipe 6 of polyethylene, projects into the box 1 through the wall 5 for connection within the box 1 to the meter via an ON-OFF controller and/or a pressure regulator (neither of which is shown).

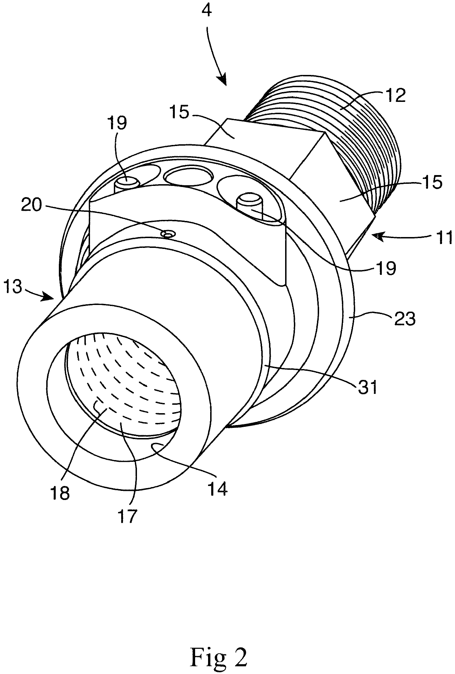

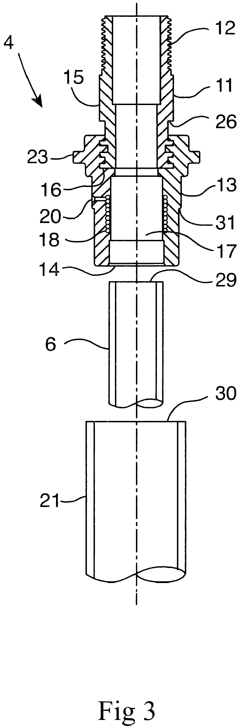

Referring now to Figures 2 and 3, the adaptor 4 is of a generally-elongate tubular form that comprises a tubular metal head 11 (for example of brass or other corrosion-resistant material) which has a screw-threaded leading end 12, and a tubular body 13 of plastics (for example, of polyethylene of a form that is resistant to ultra-violet degradation). The tubular body 13 is axially-aligned with the head 11 to provide a flow-path for gas through the adaptor 4, and has an open rear-end 14 into which the supply pipe 6 is inserted and to which it is fused for coupling the flow-path of the adaptor 4 into the supply line 3 to the meter. The head 11 is of hexagonal section externally so as to provide flats 15 suitable for engagement by an open-mouth spanner, and has a plural-grooved rear-end 16 that is moulded into the plastics body 13 to secure the head 11 gas-tight to the body 13. The moulding may be by a thermo-moulding process.

The tubular body 13 has an inside surface 17 within the rear-end 14 that is embedded with an electrical wire heating-element 18. The two ends of the wire element 18 are connected within the body 13 to a pair of shrouded, but externally-accessible, terminals 19 for use in fusing the pipe 6 to the body 13 by electrofusion. A hole 20 through the body 13 from the inside surface 17 enables the fusing to be confirmed visually by the emission of melted plastics material from it.

Where the gas-supply pipe 6 extends above ground to the box 1 it is protected within tubing 31 of fire-retardant material. The tubing 21 may for example, be of glass-fibre reinforced plastics.

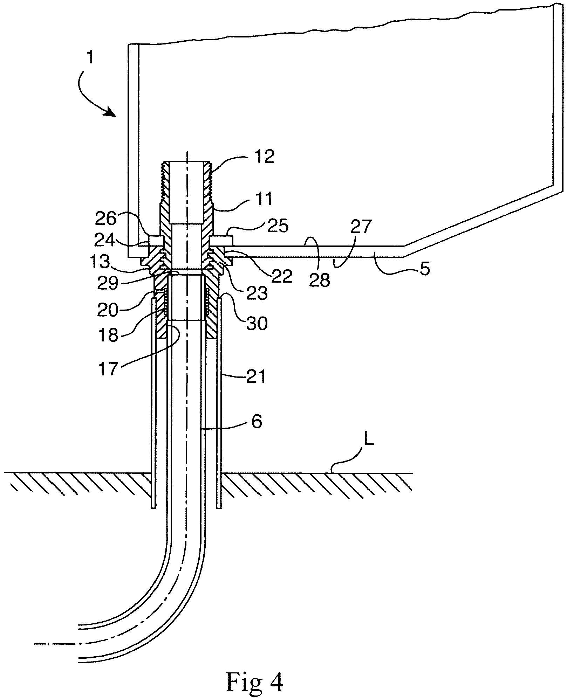

An example of an installation of a gas-meter box according to the present invention involving the adaptor 4, is illustrated in Figure 4, and will now be described. The same references as used above in relation to features of Figures 1 to 3 are retained for use for those same features represented in Figure 4.

Referring now also to Figure 4, gas connection to the meter mounted within the surface-mounted meter box 1, involves first coupling the adaptor 4 to the box 1. For this, the screw-threaded leading end 12 of the adaptor 4 is inserted through an aperture 22 in the bottom wall 5 of the box 1, and the adaptor 4 is then pushed upwardly to bring a circumferential flange 23 of the body 13 into abutment with the external surface 27 of the wall 5. The adaptor 4 is then secured in place using an arcuate C-shaped clip 24 within the box 1.

The C-shaped clip 24 is as illustrated in Figure 5, having limbs 25 that are inserted either side of the head 11 of the adaptor 4 between a shoulder 26 of the head 11 and the internal surface 28 of the wall 5 so as to clip the adaptor 4 to the wall 5 and thereby clamp the adaptor 4 to the box 1.

The gas-supply pipe 6 from the gas main is now connected to the adaptor 4, being for this extended from just below ground level L vertically upwards through the protective tubing 21 to have its leading end 29 pushed into the body 13 through the open rear-end 14 of the adaptor 4. The pipe 6 is pushed upwardly within the body 13 to take its leading end 29 beyond the embedded heating-element 18. When the pipe 6 is so placed, a short period of electrical current supply to the element 18 via the terminals 19 is effective to melt the plastics of the portion of the pipe 6 surrounded by the element 18, so as to fuse the pipe 6 to the adaptor 4 within the body 13. Confirmation of the electrofusion process is given by melt emerging through the indicator hole 20.

With the pipe 6 fused to the adaptor 4 in this way, the tubing 21 is adjusted to push its uppermost end 30 onto the tubular body 13 for abutment with a small shoulder 31 of the body 13. The tubing 21 is held in place by back-filling around the tubing 21 at the ground level L.

The installation of the gas-meter within the box 1 is now completed by establishing connection between the screw-threaded leading end 12 of the adaptor 4 and the meter via the ON/OFF controller and/or pressure regulator referred to previously. The provision of the flats 15 on the head 11 enable the adaptor 4 to be held against turning when a screw connection is made to the leading end 12 of the adaptor 4.

## Claims

1. A gas connection to an installation of a gas-meter box, wherein the connection is established via an adaptor which is clamped to the gas-meter box, and a gas-supply pipe for supplying gas to the adaptor is secured to the adaptor by electrofusion.

2. A gas connection according to claim 1 wherein the gas-supply pipe for supplying gas to the adaptor extends into the adaptor surrounded by an electrically-energisable heater element of the adaptor for use in securing the gas-supply pipe to the adaptor by electrofusion.

3. A gas connection according to claim 2 wherein the adaptor comprises a tubular head and a tubular body that are axially-aligned with one another to provide a gas-flow path through the adaptor, and wherein a part of the gas-supply pipe extends into the tubular body surrounded by the electrically-energisable heater element.

4. A gas connection according to claim 3 wherein the tubular head of the adaptor projects into the gas-meter box through a wall of the gas-meter box with the adaptor clamped to the wall between a flange of the tubular body that abuts an external surface of the wall, and a clip inserted between a shoulder of the tubular head and an inside surface of the wall.

5. A gas connection according to claim 4 wherein the clip is substantially C-shape having limbs that are inserted either side of the tubular head between the shoulder of the tubular head and the inside surface of the wall.

6. An adaptor for establishing a gas connection to an installation of a gas-meter box, wherein the adaptor comprises a tubular head and a tubular body which are axially aligned with one another to provide a gas-flow path through the adaptor, the tubular body having an open rear-end for receiving insertion into the gas-flow path of a gas-supply pipe of plastics, and an electrically-energisable heater element surrounding the gas-flow path within the tubular body for fusing an inserted gas supply-pipe to the tubular body of the adaptor by electrofusion.

7. An adaptor according to claim 6 wherein the tubular head of the adaptor projects into the gas-meter box through a wall of the gas-meter box with the adaptor clamped to the wall between a flange of the tubular body that abuts an external surface of the wall, and a clip inserted between a shoulder of the tubular head and an inside surface of the wall.

8. A method for establishing a gas connection to an installation of a gas-meter box, comprising: a step of clamping an adaptor to the gas-meter box, the adaptor having a tubular head and a tubular body which are axially-aligned with one another to provide a gas-flow path through the adaptor, and an electrical heater surrounding the gas-flow path within the tubular body; a step of inserting an end of a gas-supply pipe of plastics into the gas-flow path of the tubular body; and a step of electrically-energising the heater element surrounding the gas-flow path within the tubular body to fuse the end of the gas supply-pipe to the tubular body of the adaptor, by electrofusion.

9. A method according to claim 8 wherein the clamping of the adaptor to the gas-meter box comprises clamping the adaptor to a wall. of the gas-meter box with a flange of the tubular body abutting an external surface of the wall and insertion of a clip between a shoulder of the tubular head and an inside surface of the wall.

10. A method according to claim 9 wherein the clip wherein the clip is substantially C-shape having limbs that are inserted either side of the tubular head between the shoulder of the tubular head and the inside surface of the wall.
